# EUROPEAN PATENT APPLICATION

(11) **EP 4 582 890 A1**
(43) Date of publication of application: **09.07.2025**
(21) Application number: 23860870.7
(22) Date of filing: 30.08.2023
(51) Int. Cl.: G05B 23/02, G05B 19/048, G06T 7/00, G06F 3/048, G06N 3/08, G06Q 50/10

(54) **ARTIFICIAL INTELLIGENCE MODEL-BASED ABNORMALITY DIAGNOSIS METHOD, AND ABNORMALITY DIAGNOSIS DEVICE AND FACTORY MONITORING SYSTEM USING SAME**

(30) Priority: 31.08.2022 KR 20220109750; 13.07.2023 KR 20230090949
(71) Applicant: LG Energy Solution, Ltd., Seoul 07335 (KR)
(72) Inventor: KIM, Ki Gon, Daejeon 34122 (KR); SHIN, Sung Chang, Daejeon 34122 (KR); YOO, Seung Jo, Daejeon 34122 (KR); LEE, Jaewook, Daejeon 34122 (KR); LIM, Sang Min, Daejeon 34122 (KR)
(74) Representative: Goddar, Heinz J.
(86) International application number: PCT/KR2023/012873
(87) International publication number: WO 2024/049194

(57) **Abstract**

An abnormality diagnosis apparatus, located within a factory monitoring system, may include at least one processor; and a memory configured to store at least one instruction executed by the at least one processor.

The at least one instruction may include an instruction to receive image data about an inspection object from an image sensor; and an instruction to diagnose an abnormality in the inspection object using the received image data and a pre-trained artificial intelligence-based diagnosis model.

## Description

### [Technical Field]

This application claims priority to and the benefit of Korean Patent Application No.10-2022-0109750 filed in the Korean Intellectual Property Office on August 31, 2022 and Korean Patent Application No.10-2023-0090949 filed in the Korean Intellectual Property Office on July 13, 2023, the entire contents of which are incorporated herein by reference.

The present invention relates to an abnormality diagnosis method, an abnormality diagnosis apparatus, and a factory monitoring system, and more particularly, to an abnormality diagnosis method for diagnosing an inspection object using an artificial intelligence -based diagnosis model, an abnormality diagnosis apparatus, and a factory monitoring system using the same.

### [Background Art]

Secondary batteries, capable of recharging and reuse, are used as energy sources for small devices such as smart phones, tablet PCs, and vacuum cleaners, as well as a medium-to-large energy sources for personal mobility, automobiles, and energy storage systems (ESS) for smart grids.

Secondary batteries may be used in the form of an assembly such as a battery module in which multiple battery cells are connected in series or parallel, or a battery pack in which battery modules are connected in series or parallel, depending on the requirements of the system.

Various processes are required to produce battery cells or battery assemblies. Here, an automation equipment to perform each process is installed on a production line, and pieces of automation equipment are organically connected, making mass production of battery cells or battery assemblies possible.

To ensure that the quality of products meets the required standards, monitoring is carried out at main processing points along the production line. Generally, a video based monitoring system (FMVS; Factory Monitoring Visual System) using camera equipment installed at major processing points on the production line is used. In the case of FMVS, real-time process management is impossible as an operator must visually check the image output through a display and determine whether there is an abnormality in specific equipment or processing point and there is a limitation in terms of diagnostic accuracy.

As a technology to solve the problems stated above, an appropriate factory monitoring solution is needed that enables real-time process management with significantly improved diagnosis accuracy.

### [Detailed Description of the Invention]

### [Technical Problem]

To obviate one or more problems of the related art, embodiments of the present disclosure provide an artificial intelligence model-based abnormality diagnosis apparatus.

To obviate one or more problems of the related art, embodiments of the present disclosure also provide an abnormality diagnosis method performed by the abnormality diagnosis apparatus.

To obviate one or more problems of the related art, embodiments of the present disclosure also provide a factory monitoring system including the abnormality diagnosis apparatus.

### [Technical Solution]

In order to achieve the objective of the present disclosure, an abnormality diagnosis apparatus, located within a factory monitoring system, may include at least one processor; and a memory configured to store at least one instruction executed by the at least one processor.

Here, the at least one instruction may include an instruction to receive image data about an inspection object from an image sensor; and an instruction to diagnose an abnormality in the inspection object using the received image data and a pre-trained artificial intelligence-based diagnosis model.

The instruction to receive the image data may include an instruction to receive image data for the inspection object every preset unit time.

The diagnosis model may be pre-trained to output diagnostic result data including one or more of whether the inspection object is abnormal, a position where the abnormality occurs, and a type of the abnormality by receiving image data for the inspection object.

The instruction to diagnose an abnormality in the inspection object may include an instruction to output diagnostic result data based on comparison result between predefined normal pattern data and the received image data.

The instruction to diagnose an abnormality in the inspection object may include an instruction to calculate an error score based on the comparison result between the normal pattern data and the image data; and an instruction to determine that an abnormal state has occurred in the inspection object in the instance that the calculated error score is greater than or equal to a predefined threshold.

The instruction to diagnose an abnormality in the inspection object may include an instruction to compare the received image data with pre-stored standard image data; an instruction to correct a position of a region of interest defined as at least a part of the received image data based on the comparison result; and an instruction to diagnose whether an abnormality exists in the inspection object based on the position of the corrected region of interest.

The instruction to diagnose an abnormality in the inspection object may include an instruction to compare the received image data with pre-stored standard image data; an instruction to derive a correction function for converting the received image data into the standard image data based on the comparison result; an instruction to correct the received image data using the derived correction function; and an instruction to input the corrected image data into the diagnosis model.

The instruction to diagnose an abnormality in the inspection object may include an instruction to check the operating state of the inspection object; and an instruction not to input the received image data into the diagnosis model or to invalidate diagnostic result data output by the diagnosis model in the instance that the inspection object is in a stationary state.

The instruction to diagnose an abnormality in the inspection object may include an instruction to determine that the inspection object is in a normal state even if the calculated error score is equal to or more than a predefined threshold in the instance that the image data is classified as a predefined exception handling type.

The at least one instruction may further include an instruction to collect a plurality of image data determined to be in an abnormal state as a result of the diagnosis; an instruction to extract feature data for each of the image data; and an instruction to cluster the image data into a plurality of clusters based on extracted feature data.

The at least one instruction may further include an instruction to perform labeling for each of the clusters based on defect type information input by a user; and an instruction to retrain the diagnosis model using labeled clusters.

According to another embodiment of the present disclosure, an abnormality diagnosing method, performed by an abnormality diagnosis apparatus located within a factory monitoring system, may include receiving image data about an inspection object from an image sensor; and diagnosing an abnormality in the inspection object using the received image data and a pre-trained artificial intelligence-based diagnosis model.

The receiving image data about the inspection object may include receiving the image data for the inspection object every preset unit time.

The diagnosis model may be pre-trained to output diagnostic result data including one or more of whether the inspection object is abnormal, a position where the abnormality occurs, and a type of the abnormality by receiving image data for the inspection object.

The diagnosing an abnormality in the inspection object may include outputting diagnostic result data based on comparison result between predefined normal pattern data and the received image data.

The diagnosing an abnormality in the inspection object may include calculating an error score based on the comparison result between the normal pattern data and the image data; and determining that an abnormal state has occurred in the inspection object in the instance that the calculated error score is greater than or equal to a predefined threshold.

The diagnosing an abnormality in the inspection object may include comparing the received image data with pre-stored standard image data; correcting a position of a region of interest defined as at least a part of the received image data based on the comparison result; and diagnosing whether an abnormality exists in the inspection object based on the position of the corrected region of interest.

The diagnosing an abnormality in the inspection object may include comparing the received image data with pre-stored standard image data; deriving a correction function for converting the received image data into the standard image data based on the comparison result; correcting the received image data using the derived correction function; and inputting the corrected image data into the diagnosis model.

The diagnosing an abnormality in the inspection object may include identifying the operating state of the inspection object; and not to inputting the received image data into the diagnosis model or invalidating diagnostic result data output by the diagnosis model in the instance that the inspection object is in a stationary state.

The diagnosing an abnormality in the inspection object may include determining that the inspection object is in a normal state even if the calculated error score is equal to or more than a predefined threshold in the instance that the image data is classified as a predefined exception handling type.

The method may further include collecting a plurality of image data determined to be in an abnormal state as a result of the diagnosis; extracting feature data for each of the image data; and clustering the image data into a plurality of clusters based on extracted feature data.

The method may further include performing labeling for each of the clusters based on defect type information input by a user; and retraining the diagnosis model using labeled clusters.

According to another embodiment of the present disclosure, a factory monitoring system may include a an image sensor configured to generate image data about at least a part of an inspection object; and an abnormality diagnosis apparatus configured to receive the image data from the image sensor and to diagnose an abnormality in the inspection object using the received image data and a pre-trained artificial intelligence-based diagnosis model.

### [Advantageous Effects]

According to embodiments of the present disclosure, real-time monitoring on inspection objects located in a factory is possible with significantly improved diagnosis accuracy on inspection objects.

### [Brief Description of the Drawings]

FIG. 1 is a block diagram of a factory monitoring system according to an embodiment of the present invention.
FIG. 2 is a block diagram of a factory monitoring system according to another embodiment of the present invention.
FIG. 3 is a reference diagram for explaining a diagnosis model according to embodiments of the present invention.
FIG. 4 is a reference diagram for explaining the operation of a diagnosis model according to embodiments of the present invention.
FIG. 5 is an example of a screen of a monitoring terminal for explaining the GUI according to embodiments of the present invention.
FIGS. 6 to 9 are reference diagrams for explaining an abnormality diagnosis method according to embodiments of the present invention.
FIG. 10 is an operational flowchart of an abnormality diagnosing method according to embodiments of the present invention.
FIG. 11 is a block diagram of an abnormality diagnosis apparatus according to embodiments of the present invention.

10: inspection object
100: factory monitoring system
110: image sensor
111: image data
120: abnormality diagnosis apparatus
130: diagnosis model
131: diagnostic result data
140: monitoring terminal
200: diagnosis model creation device
510: diagnostic information output window
520: image output window

### [Best Modes for Practicing the Disclosure]

The present invention may be modified in various forms and have various embodiments, and specific embodiments thereof are shown by way of example in the drawings and will be described in detail below. It should be understood, however, that there is no intent to limit the present invention to the specific embodiments, but on the contrary, the present invention is to cover all modifications, equivalents, and alternatives falling within the spirit and technical scope of the present invention. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it can be directly coupled or connected to the other element or an intervening element may be present. In contrast, when an element is referred to as being "directly coupled" or "directly connected" to another element, there is no intervening element present.

The terms used herein is for the purpose of describing specific embodiments only and are not intended to limit the present invention. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Hereinafter, various exemplary embodiments of the present invention will be described in detail with reference to the accompanying drawings. Meanwhile, the factory monitoring system according to the present invention will be explained with an example that may be installed in a factory that produces or assembles batteries and perform diagnosis on batteries or battery processing equipment, but the scope of the present invention is not limited to these types of inspection objects.

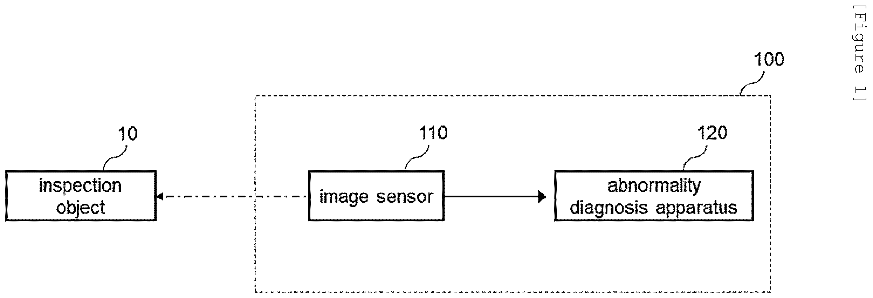

FIG. 1 is a block diagram of a factory monitoring system according to an embodiment of the present invention.

Referring to FIG. 1, the factory monitoring system 100 according to the present invention may be configured to include one or more image sensors 110 and an abnormality diagnosis apparatus 120.

The image sensor 110 may be a device that generates image data for one or more inspection objects 10 located in a factory. For example, the image sensor 110 may correspond to a camera fixed to a specific location.

The image sensor 110 may be connected to the abnormality diagnosis apparatus 120 through a network and transmit generated image data to the abnormality diagnosis apparatus 120.

The image sensor 110 may generate image data for a specific area of the inspection object 10. For example, the image sensor 110 may be installed at a specific location in an assembly facility and configured to photograph a fastening area of a specific bolt. For another example, the image sensor 110 may be installed in a facility near an electrolyte injection device and configured to photograph interior of the electrolyte injection device.

The image sensor 110 may generate image data for the inspection object 10 every preset unit time and transmit it to the abnormality diagnosis apparatus 120. For example, the image sensor 110 may generate 60 pieces of image data per second (60fps) and transmit the image data to the abnormality diagnosis apparatus 120.

The factory monitoring system 100 may be configured to include a plurality of image sensors 110. Here, each of the image sensors may be arranged at a predefined location and may be configured to generate image data for the corresponding inspection object and to transmit the generated image data to the abnormality diagnosis apparatus 120.

The image sensor 110 may be configured to have a preset field of view (FOV) depending on an installation location, a type of inspection object, diagnostic purpose, etc. For example, an image sensor installed to diagnose a plurality of bolt fastening areas may be configured as a sensor with a wide field of view of 160 degrees. For another example, an image sensor installed to diagnose mold wear may be configured as a sensor with a narrow field of view of 50 degrees.

The abnormality diagnosis apparatus 120 may be a device that receives image data from the image sensor 110 and diagnoses abnormalities in the inspection object based on the image data. Here, the abnormality diagnosis apparatus 120 may diagnose whether there is an abnormality in the inspection object using the received image data and a predefined diagnosis model.

The abnormality diagnosis apparatus 120 may use the received image data and the diagnosis model to generate diagnostic result data including one or more of the presence or absence of abnormality, a position of the abnormality, and types of the abnormality, in the inspection object 10. For example, the abnormality diagnosis apparatus 120 may be configured to detect whether an abnormality has occurred as to a change in position, clearance occurrence, poor fastening, or wear occurrence, and specify an inspection object in which an abnormal condition has occurred or detect a specific position where the abnormal condition has occurred.

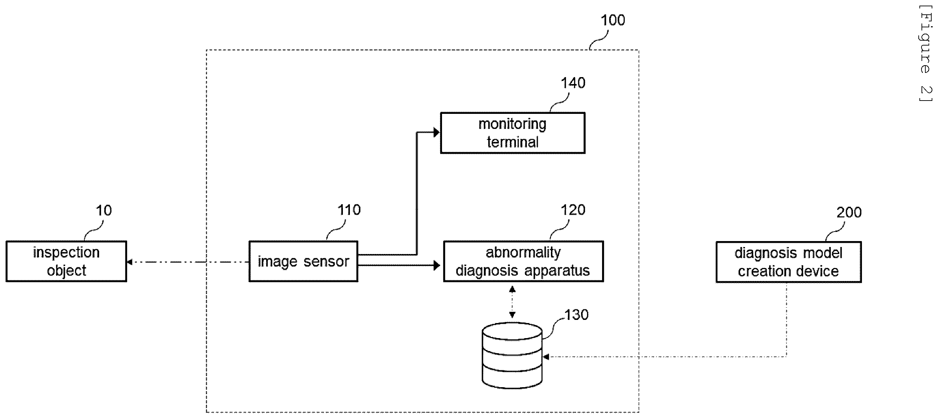

FIG. 2 is a block diagram of a factory monitoring system according to another embodiment of the present invention.

Referring to FIG. 2, the factory monitoring system 100 may be configured to include one or more image sensors 110, an abnormality diagnosis apparatus 120, a diagnosis model 130, and a monitoring terminal 140. In other words, the factory monitoring system 100 may be configured to further include a diagnosis model 130 and a monitoring terminal 140 in addition to the configuration of the factory monitoring system shown in FIG. 1.

The image sensor 110 may generate image data for one or more inspection objects 10 located in a factory and transmit the generated image data to the abnormality diagnosis apparatus 120.

The abnormality diagnosis apparatus 120 may receive image data from the image sensor 110 and diagnose abnormalities in the inspection object using the received image data and the pre-trained artificial intelligence-based diagnosis model 130.

The diagnosis model 130 may be configured to receive image data for the inspection object and output diagnostic result data. Here, the diagnosis model 130 may correspond to an artificial intelligence-based learning model that has been pre-trained so that the diagnosis model receives image data about the inspection object as input data and outputs diagnostic result data including one or more of the presence or absence of an abnormality in the inspection object, a position of the abnormality occurrence, and a type of the abnormality as output data.

In the embodiments, the diagnosis model 130 may be generated by the diagnosis model creation device 200. Here, the diagnosis model creation device 200 may pre-train the diagnosis model according to the present invention using many pieces of pre-collected learning data and provide the diagnosis model for which the training process has been completed to the factory monitoring system 100.

The monitoring terminal 140 may be a device that outputs one or more of an image and diagnosis result for the inspection object. Here, the monitoring terminal 140 may be configured to receive image data from the image sensor 110, receive diagnostic result data from the abnormality diagnosis apparatus 120, and display the image data and the diagnostic result through a predefined graphical user interface (GUI).

The monitoring terminal 140 may output image data received every unit time in real time through a display device, and output the diagnosis result for the inspection object through a display device when an abnormal condition occurs in a specific inspection object.

In other words, the monitoring terminal 140 may be a computing device that outputs images and abnormality information of the inspection object in real time, allowing the operator to intuitively determine the abnormal state, location of abnormality, and type of abnormality of the inspection object, and thus, support the operator to carry out follow-up measures quickly.

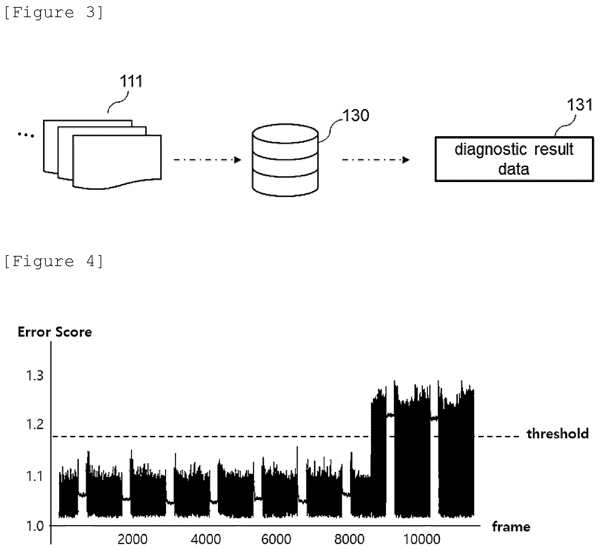

FIG. 3 is a reference diagram for explaining a diagnosis model according to embodiments of the present invention.

Referring to FIG. 3, the diagnosis model 130 may be configured to receive image data 111 which is received every unit time from the image sensor 110 as input data, and output diagnostic result data 131 including one or more of whether there is an abnormality in the inspection object, a location where the abnormality occurs, and a type of the abnormality.

Here, the diagnosis model 130 may compare predefined normal pattern data and the received image data 111 and output diagnostic result data based on the comparison result. Specifically, the diagnosis model creation device 200 may generate normal pattern data based on image data for inspection objects that are in a normal state. Here, the diagnosis model 130 may be pre-trained to compare defined normal pattern data and input image data and output diagnostic result data. For example, the diagnosis model 130 may compare image data sequentially input from image sensors with a normal bolt fastening pattern image derived based on normally bolted images, and output diagnostic result data 131 including whether there is a defect in bolt fastening and the location of the defect based on the comparison result.

FIG. 4 is a reference diagram for explaining the operation of a diagnosis model according to embodiments of the present invention.

The diagnosis model 130 may calculate an error score based on a comparison result between normal pattern data and image data. Here, the error score may be defined as data that quantifies the difference between normal pattern data and input image data.

If the calculated error score is greater than or equal to a predetermined threshold, the diagnosis model 130 may determine that an abnormal state has occurred in the inspection object.

Referring to FIG. 4, the diagnosis model 130 may calculate the error score by sequentially comparing image data which is input every unit time with normal pattern data, and determine that an abnormal state has occurred when the error score is equal to or greater than the predetermined threshold. For example, as shown in FIG. 4, if the threshold value that is a standard for abnormality is predefined as 1.18, it can be determined that an abnormal state has occurred in the inspection object at the time when the image data of the 8700th frame is generated.

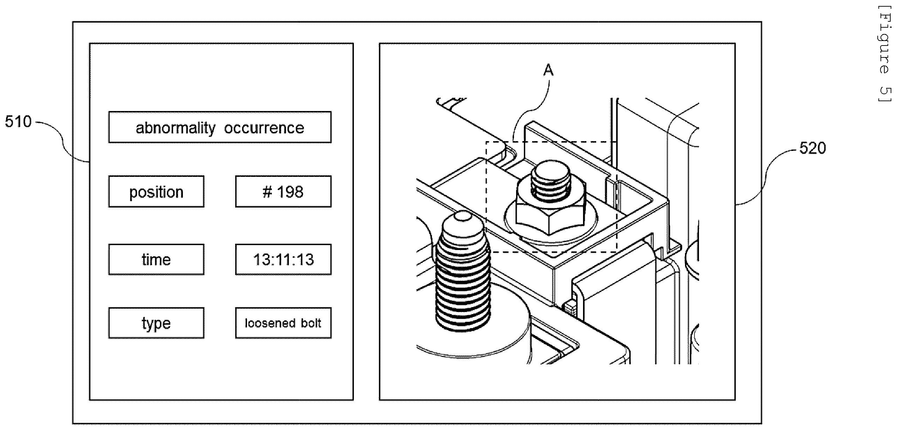

FIG. 5 is an example of a screen of a monitoring terminal for explaining the GUI according to embodiments of the present invention.

The monitoring terminal 140 may display image data received from the image sensor 110 and diagnostic result data received from the abnormality diagnosis apparatus 120 through a predefined graphic user interface (GUI).

As shown in FIG. 5, the monitoring terminal 140 may output diagnostic result data for each item through a diagnostic information output window 510 and output an image of the inspection object through a image output window 520.

The diagnostic information output window 510 may be defined to output information on whether an abnormality occurs, the location of the abnormality (for example, an identifier of the inspection object or the image sensor), the time of the abnormality occurrence, and the type of the abnormality according to a predefined layout.

The image output window 520 may be defined to output an image of the inspection object. Here, the monitoring terminal 140 may visualize and display an abnormality occurrence area (A) of the inspection object (for example, indicated with a square box) to distinguish it from other areas.

Accordingly, the embodiments of the present invention may support the operator to intuitively determine the abnormal state, location of abnormality, and type of abnormality of the inspection object through the diagnostic information output window 510 and the image output window 520 and to carry out follow-up measures quickly.

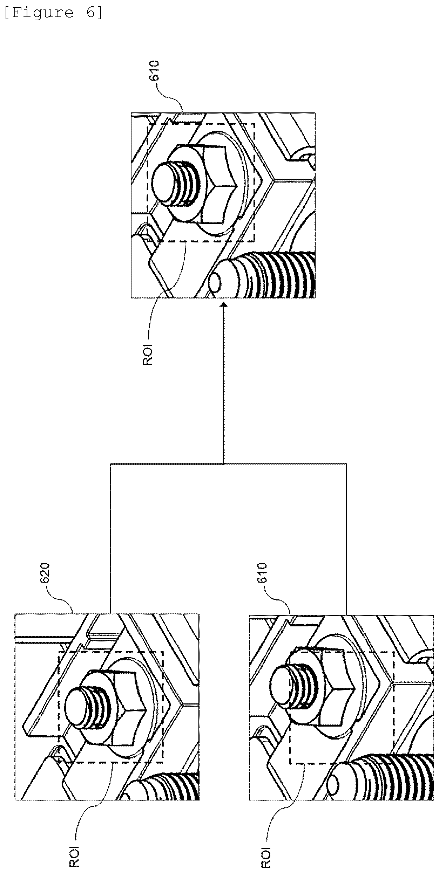

FIGS. 6 to 9 are reference diagrams for explaining an abnormality diagnosis method according to embodiments of the present invention. In the following, with reference to FIGS. 6 to 9, various embodiments that can further improve diagnosis accuracy of the abnormality diagnosis apparatus will be described.

At least a part of image data received from the image sensor may be predefined as region of interest. Here, the diagnosis model may be configured to output diagnostic result data by comparing the region of interest with predefined normal pattern data.

During operations of process equipment, the angle of the image sensor may be slightly changed due to vibration of the equipment or operator's operating error. Here, the area captured by the image sensor changes and the region of interest in the image data becomes misaligned. Accordingly, the diagnosis model may misdiagnose that an abnormal state has occurred even though any abnormal state has not occurred. The abnormality diagnosis apparatus according to embodiments of the present invention can correct the position of the region of interest according to a predefined process in order to prevent misdiagnosis due to the angle of the image sensor being distorted.

Specifically, the abnormality diagnosis apparatus may compare pre-stored standard image data with image data received from the image sensor. Here, the standard image data may correspond to image data for an inspection object in a normal state. The standard image data may be pre-stored in a storage device and the abnormality diagnosis apparatus may sequentially compare the received image data with the previously stored standard image data.

The abnormality diagnosis apparatus may be configured to compare feature points of standard image data and received image data or to compare positions of objects identified using a predefined object identification algorithm.

If the position difference value according to the comparison result is greater than or equal to a predefined threshold, the abnormality diagnosis apparatus may correct the position of the region of interest in the image data based on the comparison result. Here, the abnormality diagnosis apparatus may correct the position of the region of interest on the image data to the correct position based on the positional difference of feature points or the positional difference of identified objects.

Thereafter, the abnormality diagnosis apparatus may diagnose whether there is an abnormality in the inspection object based on the location of the corrected region of interest. In other words, the abnormality diagnosis apparatus may input the location-corrected region of interest into the diagnosis model and output diagnosis result data.

For example, referring to FIG. 6, the abnormality diagnosis apparatus may compare image data 610 received from an image sensor with previously stored standard image data 620. Here, the abnormality diagnosis apparatus may calculate the position difference values of the bolt fastening areas by comparing the characteristic points of the standard image data 620 and the image data 610 or using a predefined object identification algorithm to identify the bolt fastening areas. Afterwards, the abnormality diagnosis apparatus may change the position of the region of interest (ROI) on the image data 610 as shown in FIG. 6 using the calculated position difference value. Thereafter, the abnormality diagnosis apparatus may input the position-corrected region of interest into the diagnosis model and output diagnosis result data.

During operations of process equipments, the characteristics of image data may change due to changes in the surrounding environment of the inspection object. For example, when the lighting around the inspection object is turned off or the lighting brightness changes, characteristic values such as color, brightness, and saturation of the image data may change. Accordingly, the diagnosis model may misdiagnose that an abnormal state has occurred even though any abnormal state has not occurred. The abnormality diagnosis apparatus according to embodiments of the present invention can correct image data according to a predefined process in order to prevent misdiagnosis due to changes in the surrounding environment of the inspection object.

Specifically, the abnormality diagnosis apparatus may compare pre-stored standard image data with image data received from an image sensor. Here, the standard image data may correspond to image data for an inspection object in a normal state. The standard image data may be pre-stored in a storage device and the abnormality diagnosis apparatus may sequentially compare the received image data with the previously stored standard image data.

The abnormality diagnosis apparatus may be configured to compare characteristic values (e.g., one or more of color, brightness, and saturation) of the received image data with standard image data.

If the difference between the standard image data and the received image data is greater than or equal to a predefined threshold, the abnormality diagnosis apparatus may derive a correction function for the image data based on the comparison result. Here, the correction function may be implemented as a data conversion code that converts the received image data into standard image data.

Thereafter, the abnormality diagnosis apparatus may diagnose whether there is an abnormality in the inspection object based on the image data corrected according to the correction function. In other words, the abnormality diagnosis apparatus may input corrected image data into the diagnosis model and output diagnosis result data.

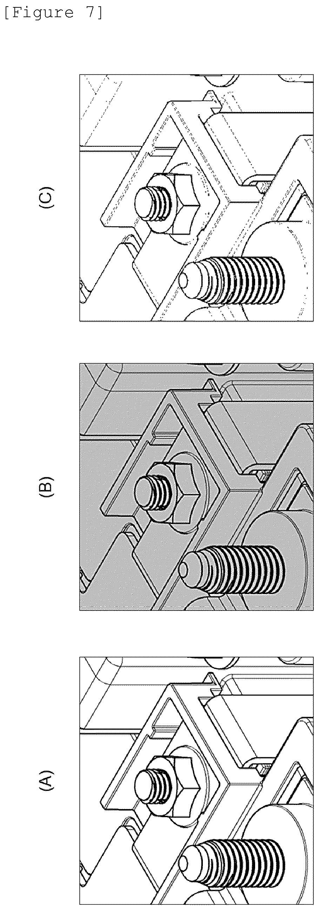

For example, referring to FIG. 7, when image data (B or C) is received from an image sensor, the abnormality diagnosis apparatus may compare characteristic values of the received image data (B or C) and the standard image data (A) pre-stored in the storage device. If the difference in characteristic values is greater than or equal to a predefined threshold, the abnormality diagnosis apparatus may derive a correction function that can convert the received image data (B or C) into standard image data (A). Thereafter, the abnormality diagnosis apparatus may correct the image data (B or C) based on the derived correction function and then, input the corrected image data into the diagnosis model to output diagnostic result data.

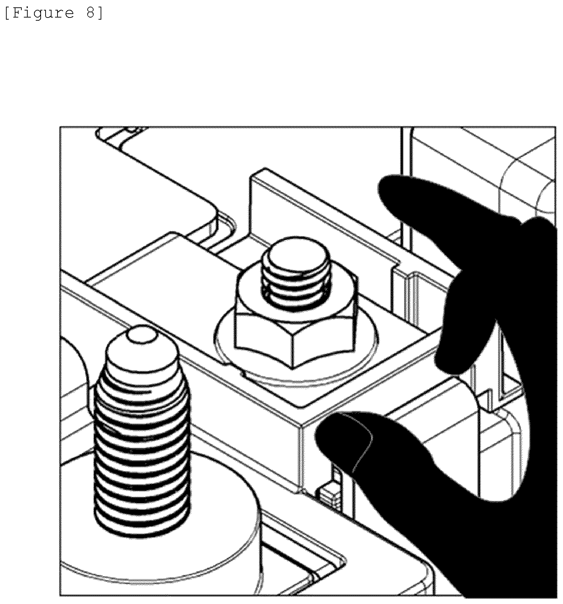

If processing equipment switches to a stopped state during process of operating the process equipment, image data generated by the image sensor may include objects other than the inspection object. For example, when process equipment is stopped (stationary), a part of the worker's body may be photographed along with the inspection object, as shown in FIG. 8. Accordingly, the diagnosis model may misdiagnose that an abnormal state has occurred even though any abnormal state has not occurred. The abnormality diagnosis apparatus according to embodiments of the present invention may correct the diagnosis result or invalidate the diagnosis result according to a predefined process in order to prevent misdiagnosis due to a change in the operating state of the inspection object.

Specifically, the abnormality diagnosis apparatus may identify the operating state of the inspection object.

In an embodiment, the abnormality diagnosis apparatus may check the operating state of the inspection object in conjunction with the inspection object or a control device of the inspection object.

In another embodiment, the abnormality diagnosis apparatus may check the operating state of the inspection object using a predefined operating state detection algorithm. For example, the diagnosis model may be configured to pre-trained so that the diagnosis model determines whether the inspection object operates at a normal operating speed by learning operation images of the inspection object. Here, the abnormality diagnosis apparatus may input image data received from the image sensor into a pre-trained diagnosis model to determine whether the inspection object is operating at a normal speed or less, thereby confirming whether the inspection object has transitioned to a stopped state.

If it is confirmed that the inspection object has switched to the stopped state, the abnormality diagnosis apparatus may not input image data that is received after the point of transition to the stopped state into the diagnosis model or may invalidate the diagnostic result data by the diagnosis model.

Thereafter, when it is confirmed that the inspection object has changed from the stopped state to the operating state, the abnormality diagnosis apparatus may diagnose whether there is an abnormality in the inspection object based on the received image data.

During the operation of the process equipment, if raw materials are not supplied to the process equipment due to a defect determination in a previous process step, a shape of the raw materials may not be included in the image data generated by the image sensor. Accordingly, the diagnosis model may misdiagnose that an abnormal state has occurred even though any abnormal state has not occurred. This misdiagnosis case occurs with very low frequency during the process.

The abnormality diagnosis apparatus according to embodiments of the present invention may correct the diagnosis result or invalidate the diagnosis result according to a predefined exception handling process in order to prevent misdiagnosis that occurs with a low frequency.

Specifically, the diagnosis model may be configured to be pre-trained using a supervised learning method to classify image data subject to exception handling into exception handling types. Here, when classified as an exception handling type by the diagnosis model, even if the calculated error score is equal to or more than a predefined threshold, the abnormality diagnosis apparatus may determine the inspection object to be in a normal state or invalidate the diagnostic result data.

When diagnostic data using the diagnosis model according to the present invention is accumulated, the diagnosis model may be retrained and updated to improve diagnostic accuracy. Here, the diagnosis model may be updated by re-learning labeled image data based on the diagnostic results.

First, the abnormality diagnosis apparatus may collect a plurality of image data determined to be in an abnormal state by the diagnosis model.

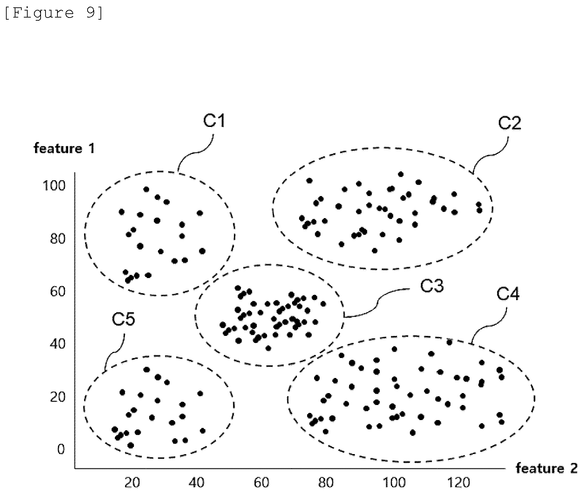

Thereafter, the abnormality diagnosis apparatus may extract feature data for each of the collected image data and cluster the image data into a plurality of clusters based on the extracted feature data. For example, referring to FIG. 9, a two-dimensional map may be created based on a plurality of features extracted from collected image data and the image data may be clustered into a plurality of clusters (C1~ C5) according to positions of the features on the two-dimensional map. Here, each cluster may be labeled based on defect type information input by the operator. For example, C1 may be labeled as [misdiagnosis], C2 may be labeled as [position defect], C3 may be labeled as [exception handling], C4 may be labeled as [bolting defect], and C5 may be labeled as [abrasion defect].

The abnormality diagnosis apparatus may retrain the diagnosis model using the image data which is labeled for each cluster. Here, the abnormality diagnostic apparatus may transmit the labeled image data to a diagnosis model generating device to allow the diagnosis model generating device to retrain the diagnosis model. When re-retraining is completed, the abnormality diagnosis apparatus may receive the retrained diagnosis model from the diagnosis model generating device and update the previously stored diagnosis model with the received diagnosis model.

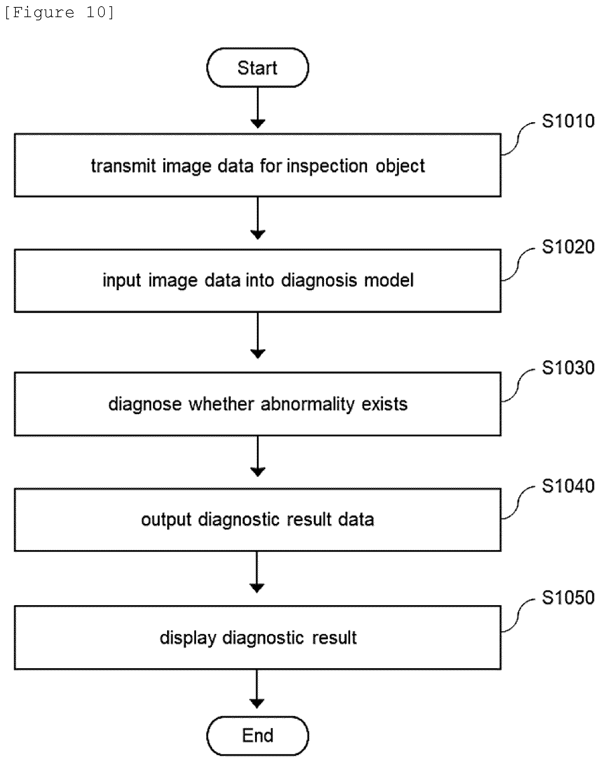

FIG. 10 is an operational flowchart of an abnormality diagnosing method according to embodiments of the present invention.

The image sensor 110 may generate image data 111 for an inspection object 10 every unit time and transmit the image data to the abnormality diagnosis apparatus 120 (S1010).

The abnormality diagnosis apparatus 120 may sequentially input the image data 111 received from the image sensor 110 into a pre-trained diagnosis model 130 (S1020).

The abnormality diagnosis apparatus 120 may diagnose in real time one or more of whether an abnormality exists in the inspection object, a position of the abnormality occurence, and a type of abnormality using the diagnosis model 130 (S1030).

Upon being determined that an abnormality has occurred in the inspection object 10, the abnormality diagnosis apparatus 120 may output diagnostic result data including one or more of whether an abnormality exists in the inspection object, a position of the abnormality, and a type of abnormality (S1040). Here, the abnormality diagnosis apparatus 120 may transmit the diagnostic result data to a monitoring terminal 140.

The monitoring terminal 140 may synchronize the diagnostic result data transmitted from the abnormality diagnosis apparatus 120 with the image data received from the image sensor 110 and output them through the display device (S1050).

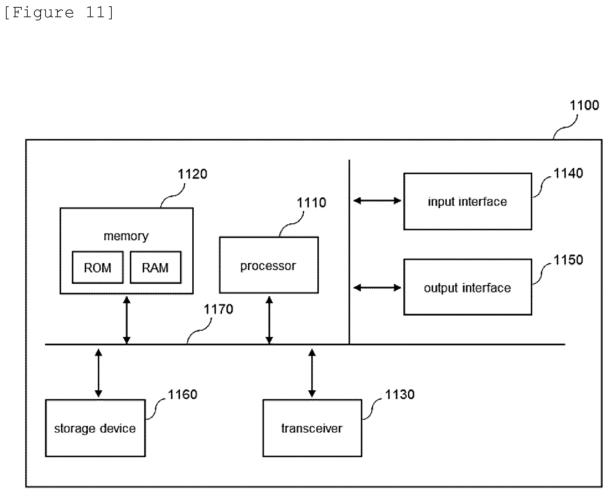

FIG. 11 is a block diagram of an abnormality diagnosis apparatus according to embodiments of the present invention.

The abnormality diagnosis apparatus 1100 according to embodiments of the present invention may include at least one processor 1110, a memory 1120 that stores at least one instruction executed by the processor, and a transceiver 1130 that is connected to a network and performs communication.

The at least one instruction may include an instruction to receive image data about an inspection object from an image sensor; and an instruction to diagnose an abnormality in the inspection object using the received image data and a pre-trained artificial intelligence-based diagnosis model.

The instruction to receive the image data may include an instruction to receive image data for the inspection object every preset unit time.

The diagnosis model may be pre-trained to output diagnostic result data including one or more of whether the inspection object is abnormal, a position where the abnormality occurs, and the type of the abnormality by receiving image data for the inspection object.

The instruction to diagnose an abnormality in the inspection object may include an instruction to output diagnostic result data based on comparison result between predefined normal pattern data and the received image data.

The instruction to diagnose an abnormality in the inspection object may include an instruction to calculate an error score based on the comparison result between the normal pattern data and the image data; and an instruction to determine that an abnormal state has occurred in the inspection object in the instance that the calculated error score is greater than or equal to a predefined threshold.

The instruction to diagnose an abnormality in the inspection object may include an instruction to compare the received image data with pre-stored standard image data; an instruction to correct a position of a region of interest defined as at least a part of the received image data based on the comparison result; and an instruction to diagnose whether an abnormality exists in the inspection object based on the position of the corrected region of interest.

The instruction to diagnose an abnormality in the inspection object may include an instruction to compare the received image data with pre-stored standard image data; an instruction to derive a correction function for converting the received image data into the standard image data based on the comparison result; an instruction to correct the received image data using the derived correction function; and an instruction to input the corrected image data into the diagnosis model.

The instruction to diagnose an abnormality in the inspection object may include an instruction to check the operating state of the inspection object; and an instruction not to input the received image data into the diagnosis model or to invalidate diagnostic result data output by the diagnosis model in the instance that the inspection object is in a stationary state.

The instruction to diagnose an abnormality in the inspection object may include an instruction to determine that the inspection object is in a normal state even if the calculated error score is equal to or more than a predefined threshold in the instance that the image data is classified as a predefined exception handling type.

The at least one instruction may further include an instruction to collect a plurality of image data determined to be in an abnormal state as a result of the diagnosis; an instruction to extract feature data for each of the image data; and an instruction to cluster the image data into a plurality of clusters based on extracted feature data.

The at least one instruction may further include an instruction to perform labeling for each of the clusters based on defect type information input by a user; and an instruction to retrain the diagnosis model using labeled clusters.

The abnormality diagnosis apparatus 1100 may further include an input interface device 1140, an output interface device 1150, a storage device 1160, etc. Respective components included in the abnormality diagnosis apparatus 1100 may be connected by a bus 1170 and communicate with each other.

Here, the processor 1110 may mean a central processing unit (CPU), a graphics processing unit (GPU), or a dedicated processor on which methods according to embodiments of the present invention are performed. The memory (or storage device) may include at least one of a volatile storage medium and a non-volatile storage medium. For example, the memory may include at least one of read only memory (ROM) and random access memory (RAM).

The operations of the method according to the embodiments of the present invention may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present invention has been described with reference to the exemplary embodiment of the present invention, but those skilled in the art may appreciate that the present invention may be variously corrected and changed within the range without departing from the spirit and the area of the present invention described in the appending claims.

## Claims

1. An abnormality diagnosis apparatus located within a factory monitoring system, the apparatus comprising:
at least one processor; and
a memory configured to store at least one instruction executed by the at least one processor,
wherein the at least one instruction includes:
an instruction to receive image data about an inspection object from an image sensor; and
an instruction to diagnose an abnormality in the inspection object using the received image data and a pre-trained artificial intelligence-based diagnosis model.

2. The apparatus of claim 1, wherein the instruction to receive the image data includes an instruction to receive image data for the inspection object every preset unit time.

3. The apparatus of claim 1, wherein the diagnosis model is pre-trained to output diagnostic result data including one or more of whether the inspection object is abnormal, a position where the abnormality occurs, and a type of the abnormality by receiving image data for the inspection object.

4. The apparatus of claim 1, wherein the instruction to diagnose an abnormality in the inspection object includes an instruction to output diagnostic result data based on comparison result between predefined normal pattern data and the received image data.

5. The apparatus of claim 4, wherein the instruction to diagnose an abnormality in the inspection object includes:
an instruction to calculate an error score based on the comparison result between the normal pattern data and the image data; and
an instruction to determine that an abnormal state has occurred in the inspection object in the instance that the calculated error score is greater than or equal to a predefined threshold.

6. The apparatus of claim 1, wherein the instruction to diagnose an abnormality in the inspection object includes:
an instruction to compare the received image data with pre-stored standard image data;
an instruction to correct a position of a region of interest defined as at least a part of the received image data based on the comparison result; and
an instruction to diagnose whether an abnormality exists in the inspection object based on the position of the corrected region of interest.

7. The apparatus of claim 1, wherein the instruction to diagnose an abnormality in the inspection object includes:
an instruction to compare the received image data with pre-stored standard image data;
an instruction to derive a correction function for converting the received image data into the standard image data based on the comparison result;
an instruction to correct the received image data using the derived correction function; and
an instruction to input the corrected image data into the diagnosis model.

8. The apparatus of claim 1, wherein the instruction to diagnose an abnormality in the inspection object includes:
an instruction to check the operating state of the inspection object; and
an instruction not to input the received image data into the diagnosis model or to invalidate diagnostic result data output by the diagnosis model in the instance that the inspection object is in a stationary state.

9. The apparatus of claim 5, wherein the instruction to diagnose an abnormality in the inspection object includes:
an instruction to determine that the inspection object is in a normal state even if the calculated error score is equal to or more than a predefined threshold in the instance that the image data is classified as a predefined exception handling type.

10. The apparatus of claim 1, wherein the at least one instruction further includes:
an instruction to collect a plurality of image data determined to be in an abnormal state as a result of the diagnosis;
an instruction to extract feature data for each of the image data; and
an instruction to cluster the image data into a plurality of clusters based on extracted feature data.

11. The apparatus of claim 10, wherein the at least one instruction further includes:
an instruction to perform labeling for each of the clusters based on defect type information input by a user; and
an instruction to retrain the diagnosis model using labeled clusters.

12. An abnormality diagnosing method performed by an abnormality diagnosis apparatus located within a factory monitoring system, the method comprising:
receiving image data about an inspection object from an image sensor; and
diagnosing an abnormality in the inspection object using the received image data and a pre-trained artificial intelligence-based diagnosis model.

13. The method of claim 12, wherein the receiving image data about the inspection object includes receiving the image data for the inspection object every preset unit time.

14. The method of claim 12, wherein the diagnosis model is pre-trained to output diagnostic result data including one or more of whether the inspection object is abnormal, a position where the abnormality occurs, and a type of the abnormality by receiving image data for the inspection object.

15. The method of claim 12, wherein the diagnosing an abnormality in the inspection object includes outputting diagnostic result data based on comparison result between predefined normal pattern data and the received image data.

16. The method of claim 15, wherein the diagnosing an abnormality in the inspection object includes:
calculating an error score based on the comparison result between the normal pattern data and the image data; and
determining that an abnormal state has occurred in the inspection object in the instance that the calculated error score is greater than or equal to a predefined threshold.

17. The method of claim 12, wherein the diagnosing an abnormality in the inspection object includes:
comparing the received image data with pre-stored standard image data;
correcting a position of a region of interest defined as at least a part of the received image data based on the comparison result; and
diagnosing whether an abnormality exists in the inspection object based on the position of the corrected region of interest.

18. The method of claim 12, wherein the diagnosing an abnormality in the inspection object includes:
comparing the received image data with pre-stored standard image data;
deriving a correction function for converting the received image data into the standard image data based on the comparison result;
correcting the received image data using the derived correction function; and
inputting the corrected image data into the diagnosis model.

19. The method of claim 12, wherein the diagnosing an abnormality in the inspection object includes:
identifying the operating state of the inspection object; and
not to inputting the received image data into the diagnosis model or invalidating diagnostic result data output by the diagnosis model in the instance that the inspection object is in a stationary state.

20. The method of claim 16, wherein the diagnosing an abnormality in the inspection object includes:
determining that the inspection object is in a normal state even if the calculated error score is equal to or more than a predefined threshold in the instance that the image data is classified as a predefined exception handling type.

21. The method of claim 12, further comprising:
collecting a plurality of image data determined to be in an abnormal state as a result of the diagnosis;
extracting feature data for each of the image data; and
clustering the image data into a plurality of clusters based on extracted feature data.

22. The method of claim 21, further comprising:
performing labeling for each of the clusters based on defect type information input by a user; and
retraining the diagnosis model using labeled clusters.

23. A factory monitoring system comprising:
an image sensor configured to generate image data about at least a part of an inspection object; and
an abnormality diagnosis apparatus configured to receive the image data from the image sensor and to diagnose an abnormality in the inspection object using the received image data and a pre-trained artificial intelligence-based diagnosis model.
